# EUROPEAN PATENT APPLICATION

(11) **EP 1 919 013 A1**
(43) Date of publication of application: **07.05.2008**
(21) Application number: 07118798.3
(22) Date of filing: 18.10.2007
(51) Int. Cl.: H01M 4/12, H01M 6/04

(54) **Alkaline battery**

(30) Priority: 19.10.2006 JP 2006284534
(71) Applicant: MATSUSHITA ELECTRIC INDUSTRIAL CO., LTD., Osaka 571-8501 (JP)
(72) Inventor: Sumiyama, Shinichi c/o MATSUSHITA ELECTRIC INDUSTRIAL CO., LTD.,, Chuo-ku Osaka 540-6207 (JP); Mototani, Yuji c/o MATSUSHITA ELECTRIC INDUSTRIAL CO., LTD.,, Chuo-ku Osaka 540-6207 (JP); Adachi, Mitsuji c/o MATSUSHITA ELECTRIC INDUSTRIAL CO., LTD.,, Chuo-ku Osaka 540-6207 (JP)
(74) Representative: TBK-Patent

(57) **Abstract**

An alkaline battery of this invention includes: a positive electrode (2) including at least one selected from the group consisting of a manganese dioxide powder and a nickel oxyhydroxide powder; a gelled negative electrode (3) including a zinc alloy powder, a gelling agent, and an alkaline electrolyte; and a separator (4) interposed between the positive electrode and the gelled negative electrode. The gelling agent comprises a polymer that is obtained by polymerizing a polymerizable monomer including at least an acrylic monomer, and part of the acrylic monomer remains in the gelling agent without being polymerized. The acrylic monomer includes at least one selected from the group consisting of acrylic acid, methacrylic acid, an acrylate, and a methacrylate. The weight ratio of the remaining acrylic monomer to the total weight of the polymer and the remaining acrylic monomer is 5000 ppm or less.

## Description

### FIELD OF THE INVENTION

The invention relates to alkaline batteries, and more specifically, to improvements in a negative electrode including a zinc alloy as a negative electrode active material.

### BACKGROUND OF THE INVENTION

In order to improve the leakage resistance of alkaline batteries, many studies have been made to improve the corrosion resistance of gelled negative electrodes.

For example, Japanese Laid-Open Patent Publication No. Hei 8-315816 ("Document 1") and Japanese Examined Patent Publication No. Hei 3-71737 ("Document 2") propose the use of a predetermined zinc alloy as a negative electrode active material. These Documents use zinc alloys which contain zinc, a metal with high hydrogen-overvoltage such as indium, bismuth, or gallium, and a light metal capable of controlling powder shape or surface state such as aluminum or calcium, in an optimum ratio.

In currently commercially available alkaline batteries, a zinc alloy containing indium, bismuth, and aluminum as well as zinc is commonly used as the negative electrode active material.

With respect to a gelling agent used to form a gelled negative electrode, reducing the content of metals other than zinc in a gelling agent has been proposed from the electrochemical standpoint. For example, Japanese Laid-Open Patent Publication No. 2000-306589 ("Document 3") proposes setting the content of metals which are lower in ionization tendency than zinc in a gelling agent to 0 to 15 ppm. This minimizes the corrosion of zinc caused by formation of a local cell by zinc and such metals.

Also, Japanese Laid-Open Patent Publication No. Hei 10-50303 ("Document 4") proposes the addition of a granular water-absorbing polymer, comprising a polyacrylate from which the uncrosslinked portion has been removed, to a gelled negative electrode as a gelling agent. Document 4 states that by adding the water-absorbing polymer to the gelled negative electrode, it is possible to prevent the degradation of discharge performance of the battery after storage and troubles which may occur in the production process.

However, indium added to the zinc alloys proposed in Documents 1 and 2 is a rare resource and expensive. The addition of bismuth may promote the passivation of zinc upon high load discharge, thereby lowering the battery performance. Further, the addition of aluminum may cause an internal short-circuit due to formation of zinc dendrites upon low load discharge. It is therefore difficult to add sufficient amounts of indium, bismuth, or aluminum to improve corrosion resistance. Therefore, in the case of using the zinc alloy disclosed in Document 1 or 2, even if the gelling agent disclosed in Document 3 or 4 is used, it is difficult to improve the corrosion resistance of the gelled negative electrode.

It should be noted that Document 4 recites that the amount of monomer remaining in a synthesized aqueous polymer solution is 1% or less (paragraph 0026).

It is therefore an object of the invention to provide an alkaline battery with excellent leakage resistance.

### BRIEF SUMMARY OF THE INVENTION

The alkaline battery of the invention includes: a positive electrode including at least one selected from the group consisting of a manganese dioxide powder and a nickel oxyhydroxide powder; a gelled negative electrode including a zinc alloy powder, a gelling agent, and an alkaline electrolyte; and a separator interposed between the positive electrode and the gelled negative electrode. The gelling agent comprises a polymer that is obtained by polymerizing a polymerizable monomer including at least an acrylic monomer, and part of the acrylic monomer remains in the gelling agent without being polymerized. The acrylic monomer includes at least one selected from the group consisting of acrylic acid, methacrylic acid, an acrylate, and a methacrylate. The weight ratio of the remaining acrylic monomer to the total weight of the polymer and the remaining acrylic monomer is 5000 ppm or less.

In the invention, examples of metal ions contained in polyacrylates and polymethacrylates include alkali metal ions such as potassium ion, sodium ion, and lithium ion, and alkaline earth metal ions such as calcium ion.

The weight ratio of the remaining acrylic monomer to the total weight of the polymer and the remaining acrylic monomer is preferably 3000 ppm or less, and more preferably 400 ppm or less.

The polymer preferably includes at least one selected from the group consisting of polyacrylic acid, sodium polyacrylate, polymethacrylic acid, and sodium polymethacrylate.

The invention also relates to an alkaline battery including: a positive electrode including at least one selected from the group consisting of a manganese dioxide powder and a nickel oxyhydroxide powder; a gelled negative electrode including a zinc alloy powder, a gelling agent, and an alkaline electrolyte; and a separator interposed between the positive electrode and the gelled negative electrode. The gelling agent comprises a polymer that is obtained by polymerizing a polymerizable monomer including at least an acrylic monomer, and part of the acrylic monomer remains in the gelling agent without being polymerized. The acrylic monomer includes at least one selected from the group consisting of acrylic acid, methacrylic acid, an acrylate, and a methacrylate. The weight ratio of the remaining acrylic monomer to the zinc alloy powder is 150 ppm or less. The weight ratio of the remaining acrylic monomer to the negative electrode active material is preferably 90 ppm or less, and more preferably 10 ppm or less.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE DRAWING

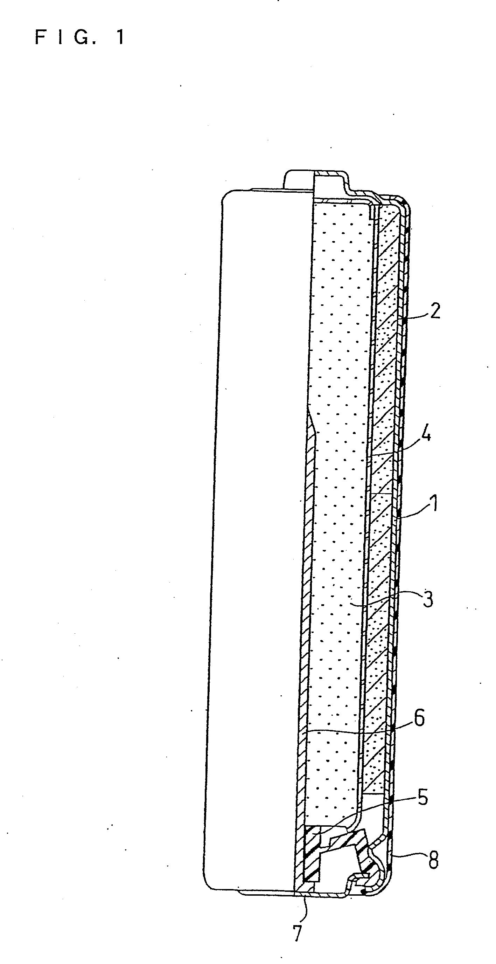

FIG. 1 is a partially sectional view schematically showing an alkaline battery according to one embodiment of the invention.

### DETAILED DESCRIPTION OF THE INVENTION

The invention is based on the finding that when a carboxylic acid or a carboxylate having a carbon-carbon double bond at the a position, such as an acrylic acid monomer, remains in a gelling agent without being polymerized, the corrosion of zinc is significantly promoted.

The alkaline battery of the invention includes a positive electrode including at least one selected from the group consisting of a manganese dioxide powder and a nickel oxyhydroxide powder; a gelled negative electrode including a zinc alloy powder, a gelling agent, and an alkaline electrolyte; and a separator interposed between the positive electrode and the gelled negative electrode. The gelling agent included in the gelled negative electrode comprises a polymer that is obtained by polymerizing a polymerizable monomer including at least an acrylic monomer, and part of the acrylic monomer remains in the gelling agent without being polymerized. The acrylic monomer includes at least one selected from the group consisting of acrylic acid, methacrylic acid, an acrylate, and a methacrylate. The weight ratio of the remaining acrylic monomer to the total weight of the polymer and the remaining acrylic monomer (hereinafter referred to as the ratio of remaining acrylic monomer) is 5000 ppm or less.

The invention is hereinafter described with reference to a drawing. FIG. 1 is a partially sectional view of a AA-size alkaline battery (LR6) according to one embodiment of the invention. In a battery 10 of FIG. 1, a hollow cylindrical positive electrode mixture 2 is contained in a cylindrical battery case 1 with a bottom such that it is in contact with the inner face of the battery case 1. The battery case 1 serves as an external terminal. In the hollow of the positive electrode mixture 2 is a gelled negative electrode 3. Between the positive electrode mixture 2 and the gelled negative electrode 3 is a cylindrical separator 4 with a bottom. The positive electrode mixture 2, the separator 4, and the gelled negative electrode 3 contain an alkaline electrolyte.

After these power generating elements including the positive electrode mixture 2, the separator 4, and the gelled negative electrode 3 are placed in the battery case 1, the opening of the battery case 1 is sealed with a resin sealing member 5 integrated with a negative electrode terminal plate 7, which is electrically connected to a negative electrode current collector 6. The outer surface of the battery case 1 is coated with an outer label 8.

The gelled negative electrode 3 includes a gelling agent, a negative electrode active material, and an alkaline electrolyte. In the invention, the gelling agent comprises a polymer obtained by polymerizing a polymerizable monomer including at least an acrylic monomer, as described above. The acrylic monomer includes at least one selected from the group consisting of acrylic acid, methacrylic acid, an acrylate, and a methacrylate. The ratio of the remaining acrylic monomer contained in the gelling agent is 5000 ppm or less.

It is known that the ratio of monomer remaining in a conventional gelling agent without being polymerized is a few % (i.e., a few tens of thousands of ppm) of the total weight of the monomer and the polymer. However, according to the invention, the ratio of the remaining acrylic monomer is reduced to 5000 ppm or less, which is significantly less than conventional ratios. As a result, the corrosion resistance of the gelled negative electrode can be improved, and hence, for example, the evolution of gas due to decomposition of the alkaline electrolyte of the negative electrode can be suppressed. It is therefore possible to provide an alkaline battery with excellent leakage resistance.

The mechanism for improving the corrosion resistance of the gelled negative electrode is not yet clear, but probably as follows.

When a lower carboxylic acid or a lower carboxylate having a carbon-carbon double bond at the a position, such as an acrylic monomer, is dissolved in an alkaline electrolyte, its carboxyl group is dissociated to release a hydrogen ion (or metal ion in the case of a salt), thereby becoming a carboxylate ion. In the carboxylate ion, a stable conjugated double bond is formed by sharing π electrons between the two oxygen atoms of the carboxyl group and the carbon-carbon double bond at the a position. As such, the carboxylate ion exhibits a very strong hydrophilic property, and upon contact with a negative electrode active material, the carboxylate ion facilitates the contact between the negative electrode active material and water. Also, the carboxylate ion has an extra electron. It is thought that the extra electron is donated to the proton adsorbed to the zinc surface via the zinc, thereby promoting the evolution of hydrogen gas. According to the invention, the promotion of the contact between the negative electrode active material and water and the evolution of gas can be significantly suppressed since the ratio of the remaining acrylic monomer is reduced to 5000 ppm or less, which is significantly less than conventional ratios.

The weight ratio of the remaining acrylic monomer to the negative electrode active material is 150 ppm or less. The weight ratio is preferably 90 ppm or less, and more preferably 10 ppm or less.

The gelling agent comprises a polymer that is obtained by polymerizing a polymerizable monomer including at least an acrylic monomer.

The polymer can be a homopolymer such as polyacrylic acid, a polyacrylate, polymethacrylic acid, or a polymethacrylate.

The polymer can be a copolymer containing at least one of an acrylic acid unit and an acrylate unit and at least one of a methacrylic acid unit and a methacrylate unit.

Alternatively, the polymer can be a copolymer containing (a) an acrylic monomer (i.e., at least one selected from the group consisting of acrylic acid, methacrylic acid, an acrylate, and a methacrylate) ("monomer (a)") and (b) a monomer other than the above-mentioned monomers ("monomer (b)"). In this case, although the ratio of the acrylic monomer units contained in the polymer is not particularly limited, it is preferably 90 mol% or more.

The monomer (b) can be at least one selected from the group consisting of other unsaturated carboxylic acids (salts) such as maleic acid (salts) and fumaric acid (salts), unsaturated carboxylic acid esters thereof, and alkyl vinyl alcohols such as methyl vinyl alcohol and ethyl vinyl alcohol.

Preferably, the polymer has a 0.2% neutralization viscosity of 24,000 to 50,000 mPa·s. As used herein, 0.2% neutralization viscosity refers to the viscosity of a solution containing a neutralized polymer at a concentration of 0.2% by weight, and 0.2% neutralization viscosity can be determined, for example, as follows.

The polymer in an amount of 1.0 g is placed into a 1L beaker, and ion-exchange water is injected into the beaker such that the total weight of the polymer and the ion-exchange water is 500 g. The resultant mixture is stirred for 4 hours by using, for example, a magnetic stirrer, to completely dissolve the polymer. A predetermined amount of a neutralizer (e.g., 1.5 ml of a 10 mol/L sodium hydroxide aqueous solution) is then added to the resultant polymer solution to adjust the pH of the polymer solution to 6.8 to 7.3. The solution is then allowed to stand at 25°C ±0.5°C in a thermostat for a predetermined time (e.g., 1 hour). The viscosity of the solution is measured by using, for example, a rotation viscometer (e.g., revolution frequency 20 rpm), to obtain the 0.2% neutralization viscosity. As the rotation viscometer, for example, model RB-80H (rotor No.6) available from TOKI SANGYO CO.,LTD. can be used.

The polymer can be prepared, for example, by obtaining a precursor polymer containing acrylic monomer units and heating the precursor polymer at 90 to 110 °C for a predetermined time. The precursor polymer can be prepared, for example, by known methods as described in Document 3. For example, a predetermined monomer is polymerized by a method such as solution polymerization or reverse phase suspension polymerization, and the resultant product is dried at a predetermined temperature, to obtain a precursor polymer. The precursor polymer is then heated at 90 to 110 °C for a predetermined time, whereby the ratio of remaining acrylic monomer can be controlled at 5000 ppm or less.

In this method, the ratio of remaining acrylic monomer can be easily controlled simply by further heating the precursor polymer.

Alternatively, the ratio of remaining acrylic monomer may also be controlled at 5000 ppm or less by heating a commercially available polymer containing acrylic monomer units at 90 to 110 °C for a predetermined time.

Preferably, the polymer includes at least one selected from the group consisting of polyacrylic acid, sodium polyacrylate, polymethacrylic acid, and sodium polymethacrylate. These polymers are industrially mass-produced and hence available at low costs.

An acrylate and a methacrylate can be prepared by neutralizing acrylic acid and methacrylic acid with a neutralizer, respectively. The neutralization may be performed before or after the polymerization. Also, the neutralization may be performed both before and after the polymerization. This holds true for other unsaturated carboxylic acids (salts) such as maleic acid (salts) and fumaric acid (salts). As the neutralizer, for example, sodium hydroxide, lithium hydroxide, potassium hydroxide, calcium hydroxide, etc. can be used.

When the polymer is a polyacrylate or a polymethacrylate, at least a part of its monomer units is a salt.

When the polymer is a copolymer composed of (i) at least one of an acrylate and a methacrylate and (ii) a monomer other than those monomers, the polymer can be prepared, for example, by neutralizing a copolymer composed of (i') at least one of acrylic acid and methacrylic acid and (ii') a monomer other than those monomers. The polymer is preferably such that at least a part of acrylic monomer units is a salt. Also, the copolymer can also be prepared by polymerizing at least one of an acrylate and a methacrylate, and a monomer other than those monomers.

The main chain of the polymer used as the gelling agent may be linear or branched. Also, the polymer may be crosslinked.

The ratio of remaining acrylic monomer is preferably 3000 ppm or less, and more preferably 400 ppm or less. When the ratio is 3000 ppm or less, it is possible to improve the corrosion resistance of the gelled negative electrode and hence the leakage resistance of the alkaline battery. When the ratio is 400 ppm or less, it is possible to further improve the durability of the gelled negative electrode upon inclusion of impurities such as iron.

The ratio of remaining acrylic monomer can be measured, for example, by high-performance liquid chromatography (hereinafter referred to as HPLC). The following describes a method for measuring the ratio of remaining acrylic acid when the gelling agent is polyacrylic acid.

For example, test liquids containing acrylic acid (special grade reagent) at various concentrations are prepared by using an aqueous solution of 0.9% by weight of sodium chloride as a solvent. The test liquids are measured in the following measurement conditions to obtain a calibration curve. Thereafter, a predetermined amount of a gelling agent (containing remaining monomer) is dispersed in a predetermined amount of the same solvent as that used for obtaining the calibration curve, and the amount of remaining monomer is quantified under the same measurement conditions as those for the calibration curve. The ratio of remaining acrylic acid monomer can be determined from the amount of the gelling agent used in the measurement and the amount of remaining acrylic acid monomer.

Exemplary HPLC measurement conditions are as follows.
- Pump: LC-10AD (available from Shimadzu Corporation)
- Detector: SPD-10A (available from Shimadzu Corporation)
- Autosampler: Model 09 (available from SIC (System Instruments Co., Ltd.))
- Column: Shodex KC-811 (available from Showa Denko K.K.)
- Temperature: 30°C
- Flow rate: 0.25 ml/min
- Wavelength: 210 nm
- Carrier: Phosphoric acid aqueous solution (pH=2)
- Injection amount: 20 µl

In the above description, polyacrylic acid was used, but even when other polymers are used, the ratio of remaining acrylic monomer can be determined basically in the same manner as described above. When the gelling agent is a copolymer obtained by polymerizing two or more kinds of acrylic monomers, the calibration curve of each of the monomers is obtained and the amount of each of the monomers is quantified. From the obtained results, the total ratio of remaining acrylic monomers can be determined.

The negative electrode active material can be, for example, a zinc alloy powder. Preferably, the zinc alloy powder has excellent corrosion resistance. More preferably, the zinc alloy powder does not contain mercury, cadmium, or lead, or contains none of them, in term of environmental concerns. An example of the zinc alloy is a zinc alloy containing indium, aluminum, and bismuth.

When the zinc alloy contains bismuth, the amount of bismuth is preferably equal to or less than 0.015% by weight of the zinc alloy, in order to avoid promotion of passivation of zinc upon heavy load discharge and degradation of battery performance.

When the zinc alloy contains aluminum, the amount of aluminum is preferably equal to or less than 0.005% by weight of the zinc alloy, in order to prevent occurrence of an internal short-circuit due to formation of zinc dentrites upon light load discharge.

Also, the gelled negative electrode preferably contains no organic inhibitor such as surfactant which impairs instantaneous electrical response.

The alkaline electrolyte added to the gelled negative electrode 3 is, for example, an aqueous solution composed mainly of potassium hydroxide.

A gelled negative electrode containing a gelling agent, a negative electrode active material, and an alkaline electrolyte can be prepared, for example, by adding a gelling agent to an alkaline electrolyte to form a gelled mixture, and mixing and dispersing a negative electrode active material in the mixture.

The mixing ratio (weight ratio) of the gelling agent to the alkaline electrolyte is preferably from 1.9:98.1 to 2.7:97.3. The mixing ratio (weight ratio) of the total of the gelling agent and the alkaline electrolyte to the negative electrode active material is preferably from 31.6:68.4 to 37.6:62.4.

The battery case 1 can be produced, for example, by press forming a nickel-plated steel plate into predetermined dimensions and shape.

The separator 4 can be formed of, for example, non-woven fabric composed mainly of polyvinyl alcohol fiber and rayon fiber.

The positive electrode mixture 2 can contain, for example, a positive electrode active material, a conductive agent, and an alkaline electrolyte. The positive electrode active material includes at least one selected from the group consisting of a manganese dioxide powder and a nickel oxyhydroxide powder. When the positive electrode active material includes both manganese dioxide and nickel oxyhydroxide, the weight ratio of manganese dioxide to nickel oxyhydroxtide is preferably from 9:1 to 4:6.

The conductive agent contained in the positive electrode mixture can be, for example, a graphite powder. The alkaline electrolyte contained in the positive electrode mixture can be, for example, an aqueous solution of potassium hydroxide. The alkaline electrolyte contained in the positive electrode mixture and the alkaline electrolyte contained in the gelled negative electrode may be the same or different.

The invention is hereinafter described by way of Examples. However, these Examples are not to be construed as limiting the invention.

### EXAMPLES

### Example 1

An alkaline battery as illustrated in FIG. 1 was produced.

### (1) Preparation of positive electrode mixture

Manganese dioxide (positive electrode active material) and graphite (conductive agent) were mixed together in a weight ratio of 90:10. The powder mixture was then mixed with an alkaline electrolyte in a weight ratio of 100:3, and the resultant mixture was sufficiently stirred and compression molded into flakes. The alkaline electrolyte added to the positive electrode was an aqueous solution containing 36% by weight of potassium hydroxide.

The flakes of the positive electrode mixture were crushed into granules, which were then classified with a sieve, to obtain the positive electrode mixture of 10 to 100 mesh. The classified positive electrode mixture was molded under pressure into hollow cylindrical positive electrode mixture pellets.

### (2) Preparation of gelled negative electrode

Sodium polyacrylate in an amount of 100 g (available from Nihon Junyaku Co., Ltd.) was dried at 110°C for 2 hours to make the ratio of unpolymerized sodium acrylate contained in the sodium polyacrylate to 10 ppm.

The 0.2% neutralization viscosity of the sodium polyacrylate was measured in the same manner as described above. As a result, the 0.2% neutralization viscosity was 27,200 mPa·s. Note that in the following Examples, the 0.2% neutralization viscosity was measured in the same manner.

The sodium polyacrylate serving as the gelling agent, an alkaline electrolyte, and a negative electrode active material were mixed together in a weight ratio of 2:33:65, to obtain a gelled negative electrode.

The negative electrode active material used was a zinc alloy powder containing 0.025% by weight of indium, 0.015% by weight of bismuth, and 0.005% by weight of aluminum. The zinc alloy powder had a volume mean particle size of 120 µm and contained not less than 30% by volume of particles of 75 µm or less.

The alkaline electrolyte added to the negative electrode was an aqueous solution containing 36% by weight of potassium hydroxide and 2% by weight of zinc oxide.

### (3) Fabrication of alkaline battery

A AA-size alkaline battery (LR6) as illustrated in FIG. 1 was produced in the following manner.

Two hollow cylindrical pellets of the positive electrode mixture 2 obtained in the above manner were inserted into the battery case 1 and pressed with a compressing device so that they closely adhered to the inner wall of the battery case 1. The weight of each of the positive electrode mixture pellets was 5.0 g.

Subsequently, the cylindrical separator 4 with a bottom was placed in the hollow of the positive electrode mixture 2. Into the separator 4, 1.5 g of an alkaline electrolyte was injected. After a predetermined time, 6.0 g of the gelled negative electrode 3 obtained in the above manner was filled into the space inside the separator 4. The alkaline electrolyte impregnated into the separator was an aqueous solution containing 36% by weight of potassium hydroxide. The separator 4 used was non-woven fabric composed mainly of polyvinyl alcohol fiber and rayon fiber.

Thereafter, the open edge of the battery case 1 was sealed with the resin sealing member 5 integrated with the negative electrode terminal plate 7, which was electrically connected to the negative electrode current collector 6. The outer surface of the battery case 1 was coated with the outer label 8. In this way, the battery of Example 1 was produced.

### Example 2

In order to examine the amount of remaining monomer in the gelling agent, a predetermined amount of sodium acrylate which was prepared by neutralizing acrylic acid (special grade reagent available from Tokyo Chemical Industry Co., Ltd.) with sodium hydroxide was added to the sodium polyacrylate used in Example 1, so that the ratio of remaining sodium acrylate was set to 100 ppm.

A battery of Example 2 was produced in the same manner as in Example 1 except for the use of the sodium polyacrylate having a ratio of remaining sodium acrylate of 100 ppm as the gelling agent.

### Example 3

A battery of Example 3 was produced in the same manner as in Example 2 except that the ratio of remaining sodium acrylate was set to 400 ppm.

### Example 4

A battery of Example 4 was produced in the same manner as in Example 2 except that the ratio of remaining sodium acrylate was set to 900 ppm.

### Example 5

A battery of Example 5 was produced in the same manner as in Example 2 except that the ratio of remaining sodium acrylate was set to 2000 ppm.

### Example 6

A battery of Example 6 was produced in the same manner as in Example 2 except that the ratio of remaining sodium acrylate was set to 3000 ppm.

### Example 7

A battery of Example 7 was produced in the same manner as in Example 2 except that the ratio of remaining sodium acrylate was set to 5000 ppm.

### Example 8

Polyacrylic acid in an amount of 100 g (available from Nihon Junyaku Co., Ltd.) was dried at 110°C for 2 hours, so that the ratio of remaining unpolymerized acrylic acid contained in the polyacrylic acid was set to 10 ppm. The 0.2% neutralization viscosity of the polyacrylic acid was 31,200 mPa·s.

A battery of Example 8 was produced in the same manner as in Example 1 except for the use of the polyacrylic acid having a ratio of remaining acrylic acid of 10 ppm as the gelling agent.

### Example 9

In order to examine the amount of remaining monomer in the gelling agent, a predetermined amount of acrylic acid (special grade reagent available from Tokyo Chemical Industry Co., Ltd.) was added to the polyacrylic acid used in Example 8, so that the ratio of remaining acrylic acid was set to 400 ppm.

A battery of Example 9 was produced in the same manner as in Example 8 except for the use of the polyacrylic acid having a ratio of remaining acrylic acid of 400 ppm as the gelling agent.

### Example 10

A battery of Example 10 was produced in the same manner as in Example 9 except that the ratio of remaining acrylic acid was set to 3000 ppm.

### Example 11

A battery of Example 11 was produced in the same manner as in Example 9 except that the ratio of remaining acrylic acid was set to 5000 ppm.

### Example 12

Sodium polymethacrylate in an amount of 100 g (available from Nihon Junyaku Co., Ltd.) was dried at 110°C for 0.5 hour, so that the ratio of remaining unpolymerized sodium methacrylate contained in the sodium polymethacrylate was set to 400 ppm. The 0.2% neutralization viscosity of the sodium polymethacrylate was 29,100 mPa·s.

A battery of Example 12 was produced in the same manner as in Example 1 except for the use of the sodium polymethacrylate having a ratio of remaining sodium methacrylate of 400 ppm as the gelling agent.

### Example 13

In order to examine the amount of remaining monomer in the gelling agent, a predetermined amount of sodium methacrylate which was prepared by neutralizing methacrylic acid (special grade reagent available from Kanto Chemical Co., Inc.) with sodium hydroxide was added to the sodium polymethacrylate used in Example 12, so that the ratio of remaining sodium methacrylate was set to 3000 ppm.

A battery of Example 13 was produced in the same manner as in Example 12 except for the use of the sodium polymethacrylate having a ratio of remaining sodium methacrylate of 3000 ppm as the gelling agent.

### Example 14

A battery of Example 14 was produced in the same manner as in Example 13 except that the ratio of remaining sodium methacrylate was set to 5000 ppm.

### Example 15

Polymethacrylic acid in an amount of 100 g (available from Nihon Junyaku Co., Ltd.) was dried at 110°C for 0.5 hour, so that the ratio of remaining unpolymerized methacrylic acid contained in the polymethacrylic acid was set to 400 ppm. The 0.2% neutralization viscosity of the polymethacrylic acid was 26,900 mPa·s.

A battery of Example 15 was produced in the same manner as in Example 1 except for the use of the polymethacrylic acid having a ratio of remaining methacrylic acid of 400 ppm as the gelling agent.

### Example 16

In order to examine the amount of remaining monomer in the gelling agent, a predetermined amount of methacrylic acid (special grade reagent available from Kanto Chemical Co., Inc.) was added to the polymethacrylic acid used in Example 15, so that the ratio of remaining methacrylic acid was set to 3000 ppm.

A battery of Example 16 was produced in the same manner as in Example 15 except for the use of the polymethacrylic acid having a ratio of remaining methacrylic acid of 3000 ppm as the gelling agent.

### Example 17

A battery of Example 17 was produced in the same manner as in Example 16 except that the ratio of remaining methacrylic acid was set to 5000 ppm.

### Example 18

Lithium polyacrylate in an amount of 100 g was dried at 110°C for 0.5 hour, so that the ratio of remaining unpolymerized lithium acrylate contained in the lithium polyacrylate was set to 400 ppm. The 0.2% neutralization viscosity of the lithium polyacrylate was 30,700 mPa·s.

A battery of Example 18 was produced in the same manner as in Example 1 except for the use of the lithium polyacrylate having a ratio of remaining lithium acrylate of 400 ppm as the gelling agent.

### Example 19

In order to examine the amount of remaining monomer in the gelling agent, a predetermined amount of lithium acrylate which was prepared by neutralizing acrylic acid (special grade reagent available from Tokyo Chemical Industry Co., Ltd.) with lithium hydroxide was added to the lithium polyacrylate used in Example 18, so that the ratio of remaining lithium acrylate was set to 3000 ppm.

A battery of Example 19 was produced in the same manner as in Example 18 except for the use of the lithium polyacrylate having a ratio of remaining lithium acrylate of 3000 ppm as the gelling agent.

### Example 20

A battery of Example 20 was produced in the same manner as in Example 19 except that the ratio of remaining lithium acrylate was set to 5000 ppm.

### Example 21

Potassium polyacrylate in an amount of 100 g was dried at 110°C for 0.5 hour, so that the ratio of remaining unpolymerized potassium acrylate contained in the potassium polyacrylate was set to 400 ppm. The 0.2% neutralization viscosity of the potassium polyacrylate was 33,400 mPa·s.

A battery of Example 21 was produced in the same manner as in Example 1 except for the use of the potassium polyacrylate having a ratio of remaining potassium acrylate of 400 ppm as the gelling agent.

### Example 22

In order to examine the amount of remaining monomer in the gelling agent, a predetermined amount of potassium acrylate which was prepared by neutralizing acrylic acid (special grade reagent available from Tokyo Chemical Industry Co., Ltd.) with potassium hydroxide was added to the potassium polyacrylate used in Example 18, so that the ratio of remaining potassium acrylate was set to 3000 ppm.

A battery of Example 22 was produced in the same manner as in Example 21 except for the use of the potassium polyacrylate having a ratio of remaining potassium acrylate of 3000 ppm as the gelling agent.

### Example 23

A battery of Example 23 was produced in the same manner as in Example 22 except that the ratio of remaining potassium acrylate was set to 5000 ppm.

### Example 24

Calcium polyacrylate in an amount of 100 g was dried at 110°C for 0.5 hour, so that the ratio of remaining unpolymerized calcium acrylate contained in the calcium polyacrylate was set to 400 ppm. The 0.2% neutralization viscosity of the calcium polyacrylate was 29,500 mPa·s.

A battery of Example 24 was produced in the same manner as in Example 1 except for the use of the calcium polyacrylate having a ratio of remaining calcium acrylate of 400 ppm as the gelling agent.

### Example 25

In order to examine the amount of remaining monomer in the gelling agent, a predetermined amount of calcium acrylate which was prepared by neutralizing acrylic acid (special grade reagent available from Tokyo Chemical Industry Co., Ltd.) with calcium hydroxide was added to the calcium polyacrylate used in Example 24, so that the ratio of remaining calcium acrylate was set to 3000 ppm.

A battery of Example 25 was produced in the same manner as in Example 24 except for the use of the calcium polyacrylate having a ratio of remaining calcium acrylate of 3000 ppm as the gelling agent.

### Example 26

A battery of Example 26 was produced in the same manner as in Example 25 except that the ratio of remaining calcium acrylate was set to 5000 ppm.

### Example 27

A copolymer containing an acrylic acid unit and a methacrylic acid unit in an amount of 100 g (available from Nihon Junyaku Co., Ltd.) was dried at 110°C for 0.5 hour, so that the total ratio of remaining unpolymerized acrylic acid and methacrylic acid contained in the copolymer was set to 400 ppm. In the copolymer, the weight ratio of the acrylic acid unit to the methacrylic acid unit was 75:25. The 0.2% neutralization viscosity of the copolymer was 33,600 mPa·s.

A battery of Example 27 was produced in the same manner as in Example 1 except for the use of the copolymer containing the acrylic acid unit and the methacrylic acid unit and having a total ratio of remaining acrylic acid and methacrylic acid of 400 ppm as the gelling agent.

### Example 28

In order to examine the amount of remaining monomer in the gelling agent, a predetermined amount of acrylic acid (special grade reagent available from Tokyo Chemical Industry Co., Ltd.) and a predetermined amount of methacrylic acid (special grade reagent available from Kanto Chemical Co., Inc.) were added to the copolymer used in Example 27, so that the total ratio of remaining acrylic acid and methacrylic acid was set to 3000 ppm.

A battery of Example 28 was produced in the same manner as in Example 27 except for the use of the copolymer containing the acrylic acid unit and the methacrylic acid unit and having a total ratio of remaining acrylic acid and methacrylic acid of 3000 ppm as the gelling agent.

### Example 29

A battery of Example 29 was produced in the same manner as in Example 28 except that the total ratio of remaining acrylic acid and methacrylic acid was set to 5000 ppm.

### Example 30

A copolymer containing an acrylic acid unit and an acrylic acid ester unit in an amount of 100 g (available from Nihon Junyaku Co., Ltd.) was dried at 110°C for 0.5 hour, so that the ratio of remaining unpolymerized acrylic acid contained in the copolymer was set to 400 ppm. In the copolymer, the weight ratio of the acrylic acid unit to the acrylic acid ester unit was 90:10. The 0.2% neutralization viscosity of the copolymer was 29,400 mPa·s.

A battery of Example 30 was produced in the same manner as in Example 1 except for the use of the copolymer containing the acrylic acid unit and the acrylic acid ester unit and having a ratio of remaining acrylic acid of 400 ppm as the gelling agent.

### Example 31

In order to examine the amount of remaining monomer in the gelling agent, a predetermined amount of acrylic acid (special grade reagent available from Tokyo Chemical Industry Co., Ltd.) was added to the copolymer used in Example 30, so that the ratio of remaining acrylic acid was set to 3000 ppm.

A battery of Example 31 was produced in the same manner as in Example 30 except for the use of the copolymer containing the acrylic acid unit and the acrylic acid ester unit and having a ratio of remaining acrylic acid of 3000 ppm as the gelling agent.

### Example 32

A battery of Example 32 was produced in the same manner as in Example 31 except that the ratio of remaining acrylic acid was set to 5000 ppm.

### Example 33

A copolymer containing a methacrylic acid unit and a methyl vinyl alcohol unit in an amount of 100 g (available from Nihon Junyaku Co., Ltd.) was dried at 110°C for 0.5 hour, so that the ratio of remaining unpolymerized methacrylic acid contained in the copolymer was set to 400 ppm. In the copolymer, the weight ratio of the methacrylic acid unit to the methyl vinyl alcohol unit was 90:10. The 0.2% neutralization viscosity of the copolymer was 28,300 mPa·s.

A battery of Example 33 was produced in the same manner as in Example 1 except for the use of the copolymer containing the methacrylic acid unit and the methyl vinyl alcohol unit and having a ratio of remaining methacrylic acid of 400 ppm as the gelling agent.

### Example 34

In order to examine the amount of remaining monomer in the gelling agent, a predetermined amount of commercially available methacrylic acid (special grade reagent) was added to the copolymer used in Example 33, so that the ratio of remaining methacrylic acid was set to 3000 ppm.

A battery of Example 34 was produced in the same manner as in Example 33 except for the use of the copolymer containing the methacrylic acid unit and the methyl vinyl alcohol unit and having a ratio of remaining methacrylic acid of 3000 ppm as the gelling agent.

### Example 35

A battery of Example 35 was produced in the same manner as in Example 34 except that the ratio of remaining methacrylic acid was set to 5000 ppm.

### Comparative Example 1 to 2

A battery of Comparative Example 1 and a battery of Comparative Example 2 were produced in the same manner as in Example 2 except that the ratio of remaining sodium acrylate was set to 7000 ppm and 9000 ppm, respectively.

### Comparative Example 3

A battery of Comparative Example 3 was produced in the same manner as in Example 9 except that the ratio of remaining acrylic acid was set to 8000 ppm.

### [Evaluation]

The batteries of Examples 1 to 35 and the batteries of Comparative Examples 1 to 3 were evaluated as follows.

### (i) Corrosion resistance of gelled negative electrode (Speed of gas evolution from negative electrode)

First, the corrosion resistance of the gelled negative electrode was evaluated. The gelled negative electrode prepared in each of Examples and Comparative Examples was collected in an amount of 10.0 g into a gas collector. The collected gelled negative electrode was stored at 45°C for 2 weeks, and the amount of hydrogen gas evolved due to the corrosion of the zinc alloy was quantified to obtain the gas evolution speed. The results are shown in Tables 1 and 2. It should be noted that the gas evolution speed needs to be 5 µl/g·day or less, since if it is not in this range, the battery will leak within 1 month in an accelerated test of leakage resistance at 80°C which is described below. The above-mentioned gas evolution speed is a value per gram of the gelled negative electrode.

### (ii) Leakage resistance of battery stored at 80°C for 1 month

In order to evaluate the leakage resistance of the batteries, 100 batteries of each kind were stored in an 80°C environment for 1 month, and the number of leaked batteries was checked. The results are shown in Tables 1 and 2. In the high temperature accelerated test, increasing the temperature by 10°C means almost doubling the time period, and increasing the temperature to 80°C from room temperature (about 20°C) thus means an almost 64-fold increase. That is, storage at 80°C for 1 month corresponds to storage at room temperature for about 5 years, during which leakage should not occur.

Tables 1 and 2 also show the weight ratio of remaining monomer to the negative electrode active material.

**[Table 1]**

| | Gelling agent | Remaining monomer | Ratio of remaining monomer (ppm) | Weight ratio of remaining monomer to negative electrode active material (ppm) | Gas evolution speed (µl/g · day) | Number of leaked batteries after storage |
|---|---|---|---|---|---|---|
| Example 1 | PA-Na | A-Na | 10 | 0.3 | 1.9 | 0 |
| Example 2 | PA-Na | A-Na | 100 | 3 | 2.3 | 0 |
| Example 3 | PA-Na | A-Na | 400 | 12 | 2.5 | 0 |
| Example 4 | PA-Na | A-Na | 900 | 27 | 2.7 | 0 |
| Example 5 | PA-Na | A-Na | 2000 | 61 | 3.4 | 0 |
| Example 6 | PA-Na | A-Na | 3000 | 92 | 3.6 | 0 |
| Example 7 | PA-Na | A-Na | 5000 | 153 | 4.1 | 0 |
| Comp. Example 1 | PA-Na | A-Na | 7000 | 215 | 6.2 | 1 |
| Comp. Example 2 | PA-Na | A-Na | 9000 | 276 | 9.8 | 3 |
| Example 8 | PAA | AA | 10 | 0.3 | 2.1 | 0 |
| Example 9 | PAA | AA | 400 | 12 | 2.7 | 0 |
| Example 10 | PAA | AA | 3000 | 92 | 3.5 | 0 |
| Example 11 | PAA | AA | 5000 | 153 | 4.6 | 0 |
| Comp. Example 3 | PAA | AA | 8000 | 246 | 8.7 | 1 |
| Example 12 | PMA-Na | MA-Na | 400 | 12 | 2.3 | 0 |
| Example 13 | PMA-Na | MA-Na | 3000 | 92 | 3.0 | 0 |
| Example 14 | PMA-Na | MA-Na | 5000 | 153 | 4.4 | 0 |
| Example 15 | PMAA | MAA | 400 | 12 | 2.9 | 0 |
| Example 16 | PMAA | MAA | 3000 | 92 | 3.6 | 0 |
| Example 17 | PMAA | MAA | 5000 | 153 | 4.3 | 0 |

**[Table 2]**

| | Gelling agent | Remaining monomer | Ratio of remaining monomer (ppm) | Weight ratio of remaining monomer to negative electrode active material (ppm) | Gas evolution speed (µl/g * day) | Number of leaked batteries after storage |
|---|---|---|---|---|---|---|
| Example 18 | PA-Li | A-Li | 400 | 12 | 2.6 | 0 |
| Example 19 | PA-Li | A-Li | 3000 | 92 | 3.9 | 0 |
| Example 20 | PA-Li | A-Li | 5000 | 153 | 4.8 | 0 |
| Example 21 | PA-K | A-K | 400 | 12 | 2.7 | 0 |
| Example 22 | PA-K | A-K | 3000 | 92 | 3.4 | 0 |
| Example 23 | PA-K | A-K | 5000 | 153 | 4.3 | 0 |
| Example 24 | PA-Ca | A-Ca | 400 | 12 | 2.6 | 0 |
| Example 25 | PA-Ca | A-Ca | 3000 | 92 | 3.9 | 0 |
| Example 26 | PA-Ca | A-Ca | 5000 | 153 | 4.5 | 0 |
| Example 27 | P(AA-MA) | AA + MA | 400 | 12 | 2.1 | 0 |
| Example 28 | P(AA-MA) | AA + MA | 3000 | 92 | 3.4 | 0 |
| Example 29 | P(AA-MA) | AA + MA | 5000 | 153 | 4.0 | 0 |
| Example 30 | P(AA-AE) | AA | 400 | 12 | 2.8 | 0 |
| Example 31 | P(AA-AE) | AA | 3000 | 92 | 3.7 | 0 |
| Example 32 | P(AA-AE) | AA | 5000 | 153 | 4.5 | 0 |
| Example 33 | P(MA-MVA) | MA | 400 | 12 | 2.5 | 0 |
| Example 34 | P(MA-MVA) | MA | 3000 | 92 | 3.4 | 0 |
| Example 35 | P(MA-MVA) | MA | 5000 | 153 | 4.6 | 0 |

In Tables 1 to 2 and Tables 3 to 4, the following abbreviations are used.
PA-Na: Sodium polyacrylate
A-Na: Sodium acrylate
PAA: Polyacrylic acid
AA: Acrylic acid
PMA-Na: Sodium polymethacrylate
MA-Na: Sodium methacrylate
PMAA: Polymethacrylic acid
MAA: Methacrylic acid
PA-Li: Lithium polyacrylate
A-Li: Lithium acrylate
PA-K: Potassium polyacrylate
A-K: Potassium acrylate
PA-Ca: Calcium polyacrylate
A-Ca: Calcium acrylate
P(AA-MA): Copolymer containing an acrylic acid unit and a methacrylic acid unit (weight ratio 75:25)
P(AA-AE): Copolymer containing an acrylic acid unit and an acrylic acid ester unit (weight ratio 90:10)
P(MA-MVA): Copolymer containing a methacrylic acid unit and a methyl vinyl alcohol unit (weight ratio 90:10)

As shown in the results of the batteries of Examples 1 to 26, when homopolymers with a ratio of remaining acrylic monomer of 5000 ppm or less were used as the gelling agent, the gas evolution speed of the gelled negative electrode was 5 µl/g·day or less. Also, even when these batteries were stored at 80°C for 1 month, they did not leak. Likewise, as shown in the results of the batteries of Examples 27 to 35, in the case of using copolymers containing an acrylic monomer unit and another monomer unit and having a ratio of remaining acrylic monomer of 5000 ppm or less, the gas evolution speed of the gelled negative electrode was 5 µl/g·day or less. Even when these batteries were stored at 80°C for 1 month, they did not leak.

On the other hand, in the case of the batteries of Comparative Examples 1 to 3 in which polymers with a ratio of remaining acrylic monomer of more than 5000 ppm were used as the gelling agent, the gas evolution speed of the gelled negative electrode exceeded 5 µl/g·day. Further, upon storage at 80°C, some of these batteries leaked within 1 month.

As described above, good characteristics were obtained from the batteries of Examples of the invention in which the amount of remaining acrylic monomer was small compared with conventional batteries. Acrylic monomers exhibit a very strong hydrophilic property when dissociated in an alkaline electrolyte and easily donate electrons. Good characteristics were obtained in the present invention probably because the influence of such acrylic monomer on the negative electrode active material was reduced.

Also, there was no substantial difference in the gas evolution speed and corrosion resistance of the negative electrode among the batteries of Examples 1 to 7 using sodium polyacrylate as the gelling agent, the batteries of Examples 18 to 20 using lithium polyacrylate, the batteries of Examples 21 to 23 using potassium polyacrylate, and the batteries of Examples 24 to 26 using calcium polyacrylate. A metal ion bound to the carboxyl group of the polymer is promptly dissociated from the carboxyl group in an alkaline electrolyte. Hence, in the case of using polymers containing an alkali metal ion other than potassium ion, sodium ion, and lithium ion, or an alkaline earth metal ion other than calcium ion, it is thought that essentially the same effects can be obtained by setting the ratio of remaining monomer contained in the polymers to 5000 ppm or less.

### (iii) Leakage resistance of battery stored at 80°C for 2 months

In view of the recent market trend of requiring increasingly higher quality and reliability, 100 batteries of Examples 1 to 6, 8 to 10, 12 to 13, 15 to 16, 18 to 19, 21 to 22, 24 to 25, 27 to 28, 30 to 31, and 33 to 34 were stored at 80°C for 2 months and the number of leaked batteries was checked in the same manner as described above. Storage at 80°C for 2 months corresponds to storage at room temperature for 10 years. The results are shown in Table 3.

**[Table 3]**

| | Gelling agent | Remaining monomer | Ratio of remaining monomer (ppm) | Number of leaked batteries after storage at 80°C for 2 months |
|---|---|---|---|---|
| Example 1 | PA-Na | A-Na | 10 | 0 |
| Example 2 | PA-Na | A-Na | 100 | 0 |
| Example 3 | PA-Na | A-Na | 400 | 0 |
| Example 4 | PA-Na | A-Na | 900 | 0 |
| Example 5 | PA-Na | A-Na | 2000 | 0 |
| Example 6 | PA-Na | A-Na | 3000 | 0 |
| Example 8 | PAA | AA | 10 | 0 |
| Example 9 | PAA | AA | 400 | 0 |
| Example 10 | PAA | AA | 3000 | 0 |
| Example 12 | PMA-Na | MA-Na | 400 | 0 |
| Example 13 | PMA-Na | MA-Na | 3000 | 0 |
| Example 15 | PMAA | MAA | 400 | 0 |
| Example 16 | PMAA | MAA | 3000 | 0 |
| Example 18 | PA-Li | A-Li | 400 | 0 |
| Example 19 | PA-Li | A-Li | 3000 | 0 |
| Example 21 | PA-K | A-K | 400 | 0 |
| Example 22 | PA-K | A-K | 3000 | 0 |
| Example 24 | PA-Ca | A-Ca | 400 | 0 |
| Example 25 | PA-Ca | A-Ca | 3000 | 0 |
| Example 27 | P(AA-MA) | AA + MA | 400 | 0 |
| Example 28 | P(AA-MA) | AA + MA | 3000 | 0 |
| Example 30 | P(AA-AE) | AA | 400 | 0 |
| Example 31 | P(AA-AE) | AA | 3000 | 0 |
| Example 33 | P(MA-MVA) | MA | 400 | 0 |
| Example 34 | P(MA-MVA) | MA | 3000 | 0 |

As shown in Table 3, by setting the ratio of remaining acrylic monomer contained in the gelling agent to 3000 ppm or less, no leakage occurred during storage at 80°C for 2 months. It is therefore expected that by setting the ratio of remaining acrylic monomer to 3000 ppm or less, good leakage resistance is ensured even upon storage at room temperature for 10 years or more.

### (iv) Gas evolution speed upon inclusion of impurity in gelled negative electrode

Assuming that impurities may enter the gelled negative electrode in a battery production process, the speed of gas evolution from the negative electrode upon inclusion of an impurity in the gelled negative electrode was measured.

Iron in an amount corresponding to 10 ppm of the amount of the zinc alloy (negative electrode active material) was added to the gelled negative electrode used in each of the batteries of Examples 1 to 3, 8 to 9, 12, 15, 18, 21, 24, 27, 30, and 33, and they were mixed together. The mixture was collected in an amount of 10.0 g into a gas collector and stored at 45°C for 2 weeks, and the amount of hydrogen gas evolved due to the corrosion of the zinc alloy was quantified. In this way, the gas evolution speed was determined. The results are shown in Table 4.

**[Table 4]**

| | Gelling agent | Remaining monomer | Ratio of remaining monomer (ppm) | Gas evolution speed upon inclusion of iron powder (µl/g·day) |
|---|---|---|---|---|
| Example 1 | PA-Na | A-Na | 10 | 3.5 |
| Example 2 | PA-Na | A-Na | 100 | 3.7 |
| Example 3 | PA-Na | A-Na | 400 | 4.6 |
| Example 8 | PAA | AA | 10 | 3.4 |
| Example 9 | PAA | AA | 400 | 4.5 |
| Example 12 | PMA-Na | MA-Na | 400 | 3.9 |
| Example 15 | PMAA | MAA | 400 | 4.4 |
| Example 18 | PA-Li | A-Li | 400 | 4.8 |
| Example 21 | PA-K | A-K | 400 | 4.1 |
| Example 24 | PA-Ca | A-Ca | 400 | 4.3 |
| Example 27 | P(AA-MA) | AA + MA | 400 | 3.9 |
| Example 30 | P(AA-AE) | AA | 400 | 4.2 |
| Example 33 | P(MA-MVA) | MA | 400 | 4.6 |

As shown in Table 4, when the ratio of remaining acrylic monomer contained in the gelling agent was 400 ppm or less, the gas evolution speed of the gelled negative electrode to which iron powder (impurity) was added did not exceed 5 µl/g·day. This indicates that even in the event that trace amounts of impurities such as iron are included into the gelled negative electrode, the leakage resistance can be maintained at a high level. It is thus possible to significantly lower the risk of leakage.

Also, among the polymers used, sodium polyacrylate used in the batteries of Examples 1 to 7, polyacrylic acid used in the batteries of Examples 8 to 11, sodium polymethacrylate used in the batteries of Examples 12 to 14, and polymethacrylic acid used in the batteries of Examples 15 to 17 are preferable. They are widely used industrially and are available at low costs.

In the foregoing Examples, the use of manganese dioxide as the single positive electrode active material has been described. However, the use of nickel oxyhydroxide as the single positive electrode active material and the use of a mixture of manganese dioxide and nickel oxyhydroxide as the positive electrode active materials can also produce the

### effects of the invention.

The alkaline battery of the invention has excellent leakage resistance and hence can be preferably used as a backup power source which is used over an extended period of time, or a power source for lights used in emergencies.

Although the invention has been described in terms of the presently preferred embodiments, it is to be understood that such disclosure is not to be interpreted as limiting. Various alterations and modifications will no doubt become apparent to those skilled in the art to which the invention pertains, after having read the above disclosure. Accordingly, it is intended that the appended claims be interpreted as covering all alterations and modifications as fall within the true spirit and scope of the invention.

An alkaline battery of this invention includes: a positive electrode including at least one selected from the group consisting of a manganese dioxide powder and a nickel oxyhydroxide powder; a gelled negative electrode including a zinc alloy powder, a gelling agent, and an alkaline electrolyte; and a separator interposed between the positive electrode and the gelled negative electrode. The gelling agent comprises a polymer that is obtained by polymerizing a polymerizable monomer including at least an acrylic monomer, and part of the acrylic monomer remains in the gelling agent without being polymerized. The acrylic monomer includes at least one selected from the group consisting of acrylic acid, methacrylic acid, an acrylate, and a methacrylate. The weight ratio of the remaining acrylic monomer to the total weight of the polymer and the remaining acrylic monomer is 5000 ppm or less.

## Claims

1. An alkaline battery comprising:
a positive electrode comprising at least one selected from the group consisting of a manganese dioxide powder and a nickel oxyhydroxide powder;
a gelled negative electrode comprising a zinc alloy powder, a gelling agent, and an alkaline electrolyte; and
a separator interposed between the positive electrode and the gelled negative electrode,
wherein the gelling agent comprises a polymer that is obtained by polymerizing a polymerizable monomer including at least an acrylic monomer,
part of the acrylic monomer remains in the gelling agent without being polymerized,
the acrylic monomer comprises at least one selected from the group consisting of acrylic acid, methacrylic acid, an acrylate, and a methacrylate, and
the weight ratio of the remaining acrylic monomer to the total weight of the polymer and the remaining acrylic monomer is 5000 ppm or less.

2. The alkaline battery in accordance with claim 1, wherein the weight ratio of the remaining acrylic monomer to the total weight of the polymer and the remaining acrylic monomer is 3000 ppm or less.

3. The alkaline battery in accordance with claim 1, wherein the weight ratio of the remaining acrylic monomer to the total weight of the polymer and the remaining acrylic monomer is 400 ppm or less.

4. The alkaline battery in accordance with claim 1, wherein the polymer includes at least one selected from the group consisting of polyacrylic acid, sodium polyacrylate, polymethacrylic acid, and sodium polymethacrylate.

5. An alkaline battery comprising:
a positive electrode comprising at least one selected from the group consisting of a manganese dioxide powder and a nickel oxyhydroxide powder;
a gelled negative electrode comprising a zinc alloy powder, a gelling agent, and an alkaline electrolyte; and
a separator interposed between the positive electrode and the gelled negative electrode,
wherein the gelling agent comprises a polymer that is obtained by polymerizing a polymerizable monomer including at least an acrylic monomer,
part of the acrylic monomer remains in the gelling agent without being polymerized,
the acrylic monomer comprises at least one selected from the group consisting of acrylic acid, methacrylic acid, an acrylate, and a methacrylate, and
the weight ratio of the remaining acrylic monomer to the zinc alloy powder is 150 ppm or less.

6. The alkaline battery in accordance with claim 5, wherein the weight ratio of the remaining acrylic monomer to the zinc alloy powder is 90 ppm or less.

7. The alkaline battery in accordance with claim 5, wherein the weight ratio of the remaining acrylic monomer to the zinc alloy powder is 10 ppm or less.
